(19) **Europäisches Patentamt European Patent Office Office européen des brevets**

(11) **EP 1 792 063 B1**

(12) **FASCICULE DE BREVET EUROPEEN**

(45) Date de publication et mention de la délivrance du brevet:
**22.09.2010 Bulletin 2010/38**

(21) Numéro de dépôt: **05798527.7**

(22) Date de dépôt: **22.08.2005**

(51) Int Cl.:
***F01N 3/022*** (2006.01)

(86) Numéro de dépôt international:
**PCT/FR2005/002117**

(87) Numéro de publication internationale:
**WO 2006/024792 (09.03.2006 Gazette 2006/10)**

(54) **BLOC FILTRANT A AILETTES POUR LA FILTRATION DE PARTICULES CONTENUES DANS LES GAZ D'ECHAPPEMENT D'UN MOTEUR A COMBUSTION INTERNE**

FILTERBLOCK MIT RIPPEN ZUM FILTERN VON TEILCHEN AUS ABGASEN EINES VERBRENNUNGSMOTORS

FILTERING BLOCK WITH FINS FOR FILTERING PARTICLES CONTAINED IN AN INTERNAL COMBUSTION ENGINE EXHAUST GASES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **25.08.2004 FR 0409083**

(43) Date de publication de la demande:
**06.06.2007 Bulletin 2007/23**

(73) Titulaire: **Saint-Gobain Centre de Recherches et d'Etudes Européen 92400 Courbevoie (FR)**

(72) Inventeurs:
• **BARDON, Sébastien 13600 La Ciotat (FR)**
• **BOUTEILLER, Bernard 84800 L'Isle sur la Sorge (FR)**

(74) Mandataire: **Sartorius, Jérome Cabinet Nony et Associés 3, rue de Penthièvre 75008 Paris (FR)**

(56) Documents cités:
| | |
|---|---|
| EP-A- 0 879 938 | DE-A1- 10 037 403 |
| FR-A- 2 840 545 | US-A- 4 364 761 |
| US-A- 4 767 309 | US-A1- 2004 037 754 |

## Description

L'invention se rapporte à un bloc filtrant pour la filtration des particules contenues dans les gaz d'échappement des moteurs à combustion interne, en particulier du type diesel, et à un corps filtrant comportant au moins un bloc filtrant selon l'invention.

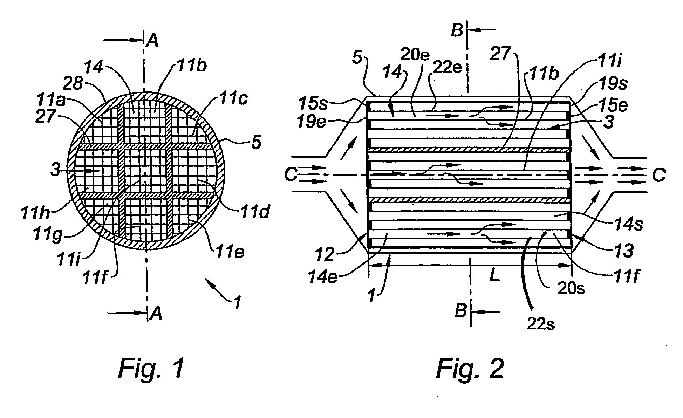

Classiquement, avant d'être évacués à l'air libre, les gaz d'échappement peuvent être purifiés au moyen d'un filtre à particules tel que celui représenté sur les figures 1 et 2, connu de la technique antérieure.

Un filtre à particules 1 est représenté sur la figure 1 en coupe transversale selon le plan de coupe B-B représenté sur la figure 2, et sur la figure 2 en coupe longitudinale selon le plan de coupe A-A représenté sur la figure 1.

Le filtre à particules 1 comporte classiquement au moins un corps filtrant 3, inséré dans une enveloppe métallique 5. Le corps filtrant 3 résulte de l'assemblage et de l'usinage d'une pluralité de blocs 11, référencés 11a-11i.

Pour fabriquer un bloc 11, on extrude une matière céramique (cordiérite, carbure de silicium,...) de manière à former une structure poreuse en nid d'abeille. La structure poreuse extrudée a classiquement la forme d'un parallélépipède rectangle s'étendant entre deux faces amont 12 et aval 13 sensiblement carrées sur lesquelles débouchent une pluralité de canaux 14 adjacents, rectilignes, et parallèles.

Après extrusion, les structures poreuses extrudées sont alternativement bouchées sur la face amont 12 ou sur la face aval 13 par des bouchons amont 15s et aval 15e, respectivement, comme cela est bien connu, pour former des canaux de types « canaux de sortie » 14s et « canaux d'entrée » 14e, respectivement. A l'extrémité des canaux de sortie 14s et d'entrée 14e opposée aux bouchons amont 15s et aval 15e, respectivement, les canaux de sortie 14s et d'entrée 14e débouchent vers l'extérieur par des ouvertures de sortie 19s et d'entrée 19e, respectivement, s'étendant sur les faces aval 13 et amont 12, respectivement.

Les canaux d'entrée 14e et de sortie 14s définissent ainsi des espaces intérieurs 20e et 20s, délimités par une paroi latérale 22e et 22s, un bouchon d'obturation 15e et 15s, et une ouverture 19s ou 19e débouchant vers l'extérieur, respectivement. Deux canaux d'entrée 14e et de sortie 14s adjacents sont en communication de fluide par la partie commune de leurs parois latérales 22e et 22s, appelée ci-après « portion commune 22 ».

Les blocs 11a-11i sont assemblés entre eux par collage au moyen de joints 27 en ciment céramique généralement constitué de silice et/ou de carbure de silicium et/ou de nitrure d'aluminium. L'assemblage ainsi constitué peut être ensuite usiné pour prendre, par exemple, une section ronde. Ainsi les blocs extérieurs 11 a, 11 b, 11 c, 11 d, 11 e, 11 f, 11 g, 11h présentent-ils une face externe arrondie par usinage.

Il en résulte un corps filtrant 3 cylindrique d'axe longitudinal C-C, qui peut être inséré dans l'enveloppe 5, un joint périphérique 28, étanche aux gaz d'échappement, étant disposé entre les blocs filtrants extérieurs 11a-11h et l'enveloppe 5.

Comme l'indiquent les flèches représentées sur la figure 2, le flux F des gaz d'échappement entre dans le corps filtrant 3 par les ouvertures 19e des canaux d'entrée 14e, traverse les parois latérales filtrantes de ces canaux pour rejoindre les canaux de sortie 14s, puis s'échappe vers l'extérieur par les ouvertures 19s.

Après un certain temps d'utilisation, les particules, ou « suies », accumulées dans les canaux d'entrée 14e du corps filtrant 3 altèrent les performances du moteur. Pour cette raison, le corps filtrant 3 doit être régénéré régulièrement, par exemple tous les 500 kilomètres. La régénération, ou « décolmatage », consiste à oxyder les suies en les chauffant jusqu'à une température permettant leur inflammation.

Pendant les phases de régénération, la température diffère selon les zones du corps filtrant 3 et ne varie pas uniformément.

En effet, les gaz d'échappement transportent vers l'aval l'énergie calorifique dégagée par la combustion des suies. De plus, les suies ne se déposent pas uniformément dans les différents canaux, s'accumulant par exemple de manière préférentielle dans la zone du filtre à proximité de son axe longitudinal, encore appelé « coeur » du corps filtrant. Les zones de combustion ne sont donc uniformément réparties dans le corps filtrant 3. La combustion des suies provoque donc une élévation de température dans le coeur du corps filtrant supérieure à celle dans les zones périphériques. Enfin, les zones périphériques du corps filtrant 3 sont refroidies, à travers l'enveloppe métallique 5, par l'air environnant.

L'inhomogénéité des températures au sein du corps filtrant 3 et les différences de nature des matériaux utilisés pour les blocs filtrants 11a-11i d'une part et pour les joints 27 d'autre part, génèrent des contraintes locales de fortes amplitudes pouvant conduire à des ruptures ou à des fissures locales. En particulier, les contraintes locales aux interfaces entre les blocs 11a-11h et l'enveloppe 5, et entre les blocs 11a-11i et les joints 27, peuvent conduire à des fissures au sein des blocs 11a-11i diminuant ainsi la durée de vie du filtre à particules 1.

Pour limiter le risque d'apparition de ces fissures, il est connu de sélectionner le ciment du joint en fonction de sa capacité à assurer la cohésion des blocs filtrants et de sa conductivité thermique. Par exemple, la demande de brevet WO 01/23069 de la société Ibiden propose d'utiliser un joint dont l'épaisseur est choisie dans la plage de 0,3 à 3 mm et constitué d'un ciment ayant une conductivité thermique comprise entre 0,1 et 10 W/m.K. Un tel joint ne permet cependant pas de supprimer complètement le risque d'apparition des fissures.

On connaît également de US 2004 037754 un corps filtrant comprenant des ensembles imbriqués de canaux d'entrée et de canaux de sortie adjacents, disposés en alternance de manière à former, en section, un motif en damier. Le volume global des canaux d'entrée est sensiblement identique à celui des canaux de sortie. Les espaces intérieurs de certains canaux d'entrée et/ou de sortie présentent des ailettes destinées à recevoir un catalyseur. Ces ailettes présentent l'avantage d'augmenter la surface totale des parois latérales délimitant les canaux, tout en maintenant sensiblement la surface de filtration. US 2004 037754 ne précise pas les conditions dans lesquelles les ailettes pourraient éventuellement avoir un effet sur la présence de fissures.

Un corps filtrant alternatif est également connu du document FR 2840545.

Le but de l'invention est de fournir de nouveaux blocs et corps filtrants aptes à diminuer encore le risque de fissures et à augmenter la surface totale disponible, par exemple pour y fixer un catalyseur, sans diminuer sensiblement la surface de filtration.

Selon l'invention, on atteint ce but au moyen d'un bloc filtrant pour la filtration des particules contenues dans les gaz d'échappement d'un moteur à combustion interne, comprenant des ensembles imbriqués de canaux d'entrée et de canaux de sortie adjacents, lesdits canaux d'entrée et de sortie étant disposés en alternance de manière à former, en section, un motif en damier, le volume global desdits canaux d'entrée étant supérieur à celui desdits canaux de sortie. Le bloc selon l'invention est remarquable en ce qu'au moins un espace intérieur d'un desdits canaux comporte au moins une ailette interne.

On appelle « ailette » un élément fixé sur une paroi latérale d'un canal d'entrée ou de sortie et présentant une conductivité thermique supérieure à celle des gaz d'échappement. Une ailette peut prendre une forme quelconque : cloison, plaquette, lamelle, etc.

La présence d'ailettes dans certains canaux facilite la conductivité thermique radiale, les ailettes formant par définition des voies privilégiées d'évacuation de la chaleur. La chaleur s'évacue donc plus rapidement qu'avec un bloc filtrant de la technique antérieure et les différences de températures entre le coeur et la périphérie du filtre en sont limitées. Les contraintes thermo-mécaniques, pouvant être à l'origine de fissures dans les joints et/ou dans les blocs filtrants, sont donc réduites et la durée de vie du filtre à particules augmentée.

Selon l'invention, l'épaisseur « Ea » de l'ailette interne, mesurée en mètre dans une coupe transversale, de préférence constante, répond à l'expression suivante :

$$Ea \leq 0,39*p - 0,7*((2*E_{pf})-E_{pf}^2)$$

où

-    « $E_{pf}$ » désigne l'épaisseur moyenne des parois filtrantes du canal comportant ladite ailette, mesurée en mètre dans ladite coupe transversale,
-    « p » est le pas du réseau de canaux du bloc, mesuré en mètre dans ladite coupe transversale.

Selon d'autres caractéristiques préférées de l'invention,

-    Ladite ailette est sensiblement plane et, de préférence, s'étend selon un plan longitudinal.
-    Ladite ailette définit une surface continue et/ou est venue de matière avec une paroi latérale dudit canal.
-    Ladite ou lesdites ailette(s) cloisonne(nt) ledit espace intérieur, c'est-à-dire le sépare(nt) en une pluralité de sous-espaces intérieurs.
-    Tous lesdits espaces intérieurs des seuls canaux d'entrée comportent au moins une ailette.
-    Au moins une paroi intermédiaire séparant deux rangs horizontaux ou verticaux desdits canaux présente, en coupe transversale, une forme ondulée, de préférence sinusoïdale. De préférence, toutes les parois intermédiaires séparant deux rangées verticales ou horizontales de canaux ont une forme ondulée, de préférence sinusoidale.
-    L'épaisseur « Ea » de l'ailette interne, mesurée en mètre dans ladite coupe transversale, de préférence constante, répond à l'expression suivante :

$$Ea \leq p - E_{pf} - [420*p^2/(1+A)]$$

où

-    « $E_{pf}$ » et « p » ont les mêmes significations que ci-dessus, et
-    « A » désigne le taux d'asymétrie dans ladite coupe transversale.

- L'épaisseur « Ea » de l'ailette interne (30) est inférieure ou égale à l'épaisseur moyenne « $E_{pf}$ » des parois filtrantes du canal comportant ladite ailette.
- Le bloc filtrant comporte une pluralité d'ailettes s'étendant à partir d'une ligne de jonction, lesdites ailettes étant de préférence disposées équi-angulairement autour de la ligne de jonction.
- L'ensemble des ailettes internes d'un canal, vues en coupe transversale, présente une forme de X, les extrémités de chacune des quatre branches du X étant chacune en contact avec un angle dudit canal.

L'invention concerne également un corps filtrant destiné à un filtre à particules, remarquable en ce qu'il comporte au moins un bloc filtrant conforme à l'invention.

La description qui va suivre, faite en se référant au dessin annexé, ainsi que les exemples permettront de mieux comprendre et apprécier les avantages de l'invention. Dans ce dessin :

- la figure 1 représente un filtre à particules selon la technique antérieure, en coupe transversale selon le plan de coupe transversal B-B représenté sur la figure 2 ;

- la figure 2 représente le même filtre à particules, selon le plan de coupe longitudinale A-A représenté sur la figure 1 ;

- les figures 3a-3f, 4 et 5 représentent la face amont de blocs ou de parties de blocs filtrant permettant d'illustrer différents agencements d'ailettes possibles, les blocs des figures 3e, 4 et 5 étant conformes à l'invention, un mode de réalisation préféré étant représenté sur la figure 5.

Pour améliorer la clarté des figures, le nombre de canaux représentés est très inférieur à celui des blocs filtrants classiquement commercialisés.

Sur ces figures, non limitatives, les différents éléments ne sont pas nécessairement représentés à la même échelle. En particulier, les épaisseurs des ailettes et des parois séparant les différents canaux ne sont pas à l'échelle et ne constituent pas une limite à l'invention.

Des références identiques ont été utilisées sur les différentes figures pour désigner des éléments identiques ou similaires.

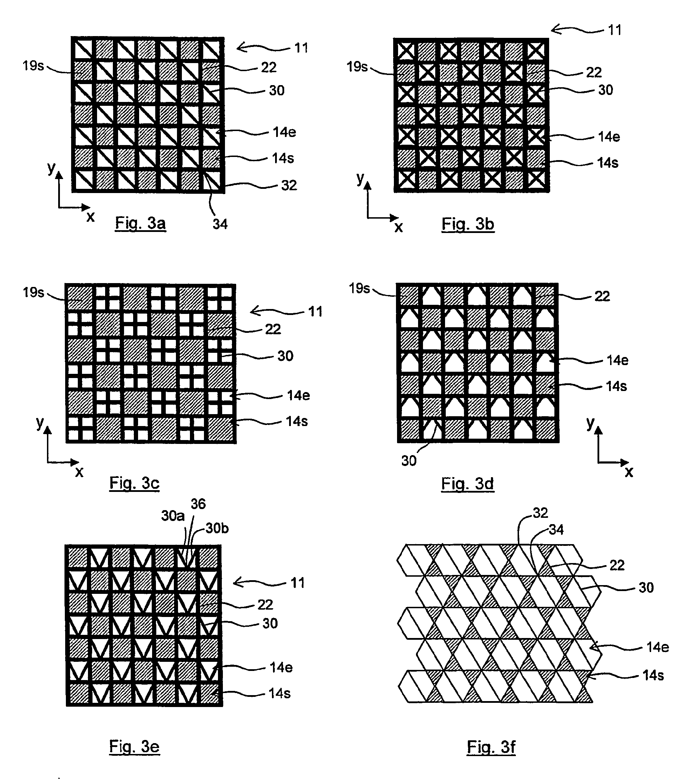

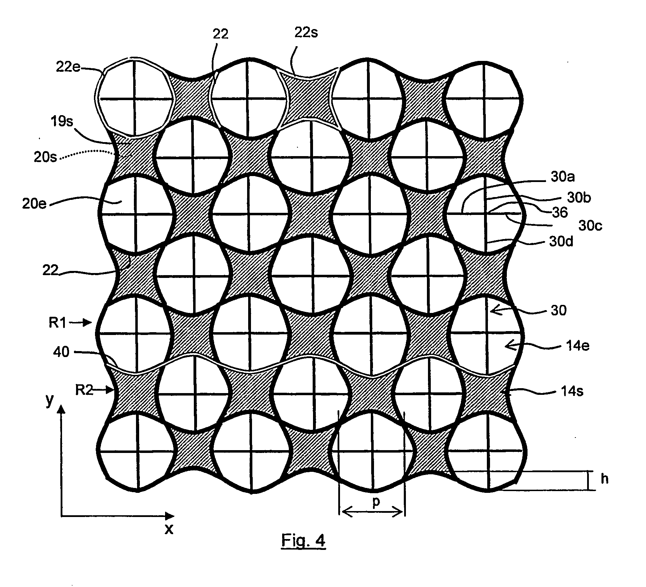

Les figures 1 et 2 ayant été décrites en préambule, on se reporte aux figures 3a-3f et 4.

Le bloc 11 comporte des ensembles de canaux d'entrée 14e et de canaux de sortie 14s adjacents, agencés les uns par rapport aux autres de manière que l'intégralité du gaz filtré par un canal d'entrée quelconque passe dans des canaux de sortie adjacents audit canal d'entrée. Avantageusement, il n'existe pas de zone(s) d'un ou plusieurs canal(aux) d'entrée qui débouche(nt) dans un autre canal d'entrée, zone(s) qui ne peu(ven)t être utile(s) à la filtration puisque les gaz d'échappement peuvent la (les) traverser dans les deux sens. La surface de filtration (c'est-à-dire la surface des parois des canaux d'entrée susceptible d'être traversée par le flux gazeux à filtrer) disponible pour un volume de bloc filtrant déterminé en est optimisée.

De préférence, les canaux d'entrée 14e et de sortie 14s sont parallèles et rectilignes suivant la longueur L du bloc filtrant. Avantageusement, il est ainsi possible de fabriquer par extrusion la structure en nid d'abeille convenant à la fabrication d'un bloc filtrant selon l'invention.

Les ensembles de canaux d'entrée 14e et de canaux de sortie 14s sont imbriqués l'un dans l'autre de manière à former, en section transversale, un motif en damier où lesdits canaux d'entrée 14e alternent avec lesdits canaux de sortie 14s, dans le sens de la hauteur (direction y) comme dans celui de la largeur (direction x). La paroi latérale 22e d'un canal d'entrée 14e est donc formée des portions communes de paroi 22 séparant le volume intérieur de ce canal 14e des volumes intérieurs 20s des canaux de sortie adjacents. De même, la paroi latérale 22s d'un canal de sortie 14s est formée des portions communes de paroi 22 séparant le volume intérieur 20s de ce canal 14s des volumes intérieurs 20e des canaux d'entrée adjacents (voir figure 4).

Selon l'invention, au moins un des canaux comporte une ailette 30. Les figures 3a à 3f et 4 présentent différentes formes possibles d'ailettes 30. Toutes les combinaisons des modes de réalisation représentés sont également envisagées.

A la différence des portions communes de parois 22 qui séparent les canaux de sortie et d'entrée, qui sont donc en contact avec des gaz d'échappement non filtrés circulant dans les canaux d'entrée et avec des gaz d'échappement filtrés circulant dans les canaux de sortie, une ailette 30 n'est en contact qu'avec des gaz non filtrés ou des gaz filtrés, selon que ladite ailette 30 est dans l'espace intérieur 20e d'un canal d'entrée ou dans l'espace intérieur 20s d'un canal de sortie, respectivement.

La forme d'une ailette 30 n'est pas limitative. Une ailette peut être courbe ou, de préférence, plane, être discontinue, c'est-à-dire présenter des « trous » ou, de préférence, continue, s'étendre sur une portion seulement du canal ou, de préférence, s'étendre sur toute la longueur L du canal, être fixée sur la paroi latérale par des points de fixation ou, de préférence, par une ou plusieurs lignes de fixation.

Lorsqu'une ailette 30 est fixée sur une paroi latérale en plusieurs points de fixation, elle participe avantageusement à la rigidité du bloc filtrant 11. A rigidité équivalente, l'épaisseur des parois des canaux peut donc être réduite. Avantageusement, les surfaces de filtration des canaux en sont augmentées. En outre, les espaces intérieurs des canaux en sont également accrus ce qui limite la perte de charge à la traversée du bloc filtrant et, en ce qui concerne les canaux d'entrée, augmente le volume disponible pour le stockage des suies. Ainsi, la durée entre les régénérations peut être accrue et la durée de vie, liée à la capacité de stockage en résidus, est augmentée.

Pour optimiser l'effet d'une ailette 30 sur la rigidité du bloc 11, il est préférable que l'ailette 30 soit sensiblement plane et fixée selon deux lignes de fixation 32 et 34 à la paroi latérale du canal dans lequel elle s'étend (voir figure 3a). L'emplacement des lignes de fixation est déterminé de manière à optimiser la résistance aux contraintes mécaniques et/ou l'évacuation de la chaleur.

Il est également préférable que l'ailette 30 s'étende sensiblement longitudinalement, et de préférence sur toute la longueur L du bloc. La fabrication du bloc par extrusion en est facilitée, l'ailette 30 étant alors venue de matière avec la paroi latérale du canal au sein duquel elle s'étend.

Comme représenté sur la figure 4, un canal peut contenir une ou plusieurs ailettes 30a-30d, de préférence connectées entre elles par des lignes de jonction 36 s'étendant sensiblement selon l'axe du canal. De préférence, les ailettes 30a-30d sont alors disposées équi-angulairement autour de cet axe.

Comme représenté sur la figure 3e, les lignes de jonction 36 entre différentes ailettes 30a et 30b peuvent encore former une ligne de fixation avec la paroi latérale du canal.

De préférence, comme sur les figures 3a-3f et 4, tous les canaux d'entrée 14e sont pourvus de moyens d'ailette identiques. De préférence également, tous les canaux de sortie 14s sont pourvus de moyens d'ailette identiques, identiques ou différents des moyens d'ailette des canaux d'entrée 14e.

Dans une variante de l'invention dans laquelle le bloc filtrant 11 est destiné à être utilisé comme support de catalyseur, les ailettes 30 sont recouvertes d'un catalyseur. La présence d'ailettes 30 augmente alors la quantité de support disponible pour le catalyseur. Dans certaines applications, par exemple pour le traitement des oxydes d'azote, NOx, l'efficacité du bloc filtrant est fonction de la surface de contact entre les gaz et le catalyseur. L'augmentation de la surface portant du catalyseur résultant de la présence des ailettes 30 est alors particulièrement avantageuse.

Les ailettes 30 n'étant pas, par définition, des parois filtrantes, les dépôts de suie et de cendres sur les ailettes sont faibles. Le catalyseur déposé sur les ailettes est donc soumis à des températures plus faibles que le catalyseur déposé sur les parois latérales de filtration. En outre, les interactions chimiques suie/catalyseur ou cendres/catalyseur en sont réduites (moins de corrosion). Avantageusement, la durée de vie du catalyseur est donc significativement accrue.

Dans cette variante, les ailettes 30 sont de préférence disposées dans les seuls canaux d'entrée 14e, de préférence dans tous les canaux d'entrée 14e.

Quelle que soit la variante, comme représenté sur les figures 3f et 4, les canaux d'entrée 14e ont selon l'invention une section transversale supérieure à celle des canaux de sortie 14s afin d'augmenter le volume disponible pour le stockage des résidus. Avantageusement, la fréquence de nettoyage du filtre en est réduite.

Comme représenté à la figure 4, les portions communes de parois peuvent être déformées pour accroître le volume global des canaux d'entrée 14e aux dépens de celui des canaux de sortie 14s. Par exemple, une portion commune 22 entre un canal d'entrée 14e et un canal de sortie 14s peut être concave du côté du canal d'entrée 14e et convexe du côté du canal de sortie 14s.

De préférence, une paroi intermédiaire 40, non plane, séparant deux rangs horizontaux $R_1$ et $R_2$ de canaux (et donc formée par un ensemble de portions communes 22 de parois latérales de ces canaux), ou séparant deux rangs verticaux, est concave du côté des canaux d'entrée 14e et convexe du côté des canaux de sortie 14s.

En suivant un rang horizontal (selon l'axe x) ou vertical (selon l'axe y) de canaux, la paroi intermédiaire 40, est de préférence d'épaisseur constante et présente de préférence, en coupe transversale, une forme ondulée ou « en vague » (« wavy » en anglais), la paroi intermédiaire 40 ondulant sensiblement d'une demi longueur d'ondulation sur la largeur d'un canal.

On appelle "longueur" d'une ondulation, la distance séparant deux points de cette ondulation localisés à une même hauteur, avec le même sens de variation de pente. Dans le cas d'une ondulation périodique, la "longueur" de l'ondulation est appelée "période".

L'ondulation est périodique, l'amplitude des ondulations est constante. L'ondulation présente une forme sinusoïdale dont la demi-période est égale au pas "p" du réseau de canaux, comme représenté sur la figure 4.

De préférence enfin, toutes les parois intermédiaires 40 d'un bloc, s'étendant verticalement ou horizontalement, présentent, en coupe transversale, une ondulation de forme identique.

Le taux d'asymétrie « A » désigne le rapport entre la moitié de l'amplitude « h » et la demi longueur de ladite ondulation, c'est-à-dire, dans le cas d'une ondulation périodique, le rapport entre moitié de l'amplitude « h » et la demi-période. Il est exprimé dans le tableau 1 en pourcentage de cette demi-longueur.

$$A = h/2 \times (1/p)$$

Les exemples suivants, rassemblés dans le tableau 1, sont fournis à titre illustratif et non limitatif.

L'exemple *1 représente le bloc de référence, comportant une structure carrée, dépourvue d'ailettes.

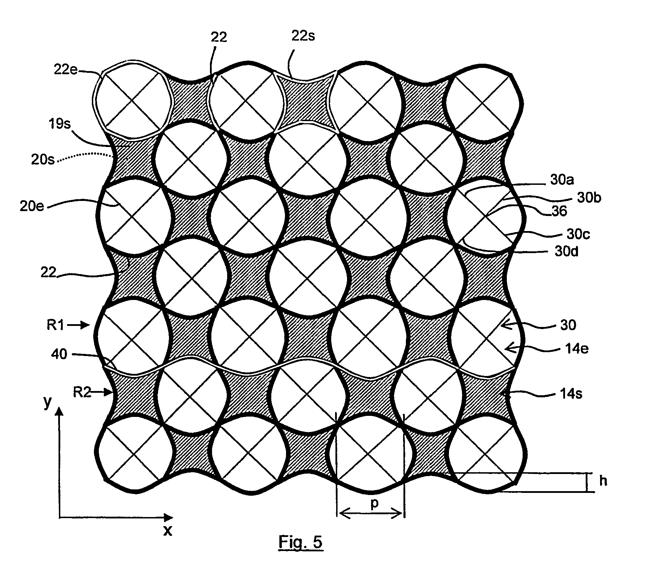

Les blocs particuliers étudiés comportent une structure « en vague », les parois intermédiaires ondulant sinusoïdalement d'une demi-période sur la largeur d'un canal. Tous les canaux d'entrée comportent des ailettes internes en forme de X, similaires à celles représentées sur la figure 5. Chaque espace intérieur 20e est ainsi cloisonné en quatre parties sensiblement de même volume. Aucun canal de sortie ne comporte d'ailette.

La densité de canaux « Dc », en nombre de canaux par pouce carré (cpsi), l'épaisseur des parois filtrantes « $E_{pf}$ », le taux d'asymétrie « A » et l'épaisseur des ailettes « Ea » sont donnés dans le tableau 1. Les abréviations suivantes sont utilisées dans le tableau 1 suivant :

- CATsurface : surface totale des parois des canaux d'entrée, y compris la surface des ailettes. Il est préférable que cette surface soit élevée lorsqu'elle est destinée à être recouverte par un catalyseur. L'effet du catalyseur en est en effet augmenté. Une surface totale élevée favorise également les échanges thermiques entre les gaz des combustion et le bloc, et donc l'évacuation de la chaleur. Le risque de fissuration est ainsi avantageusement limité.
- OFA : sections des canaux d'entrée. Cette surface est représentative du volume des canaux d'entrée et donc de la capacité de stockage des résidus de combustion générés (partie des suies qui ne brûle pas et résidus non-combustibles émis par le moteur)
- SF : surface de filtration. Un bloc filtrant s'encrasse d'autant moins vite que la surface de filtration est grande. En outre, à niveau d'encrassement identique, la perte de charge induite est d'autant plus faible qu'un bloc filtrant présente une surface de filtration élevée.
- Dp : perte de charge à la traversée du bloc filtrant, pour un débit et une température donnés.

Toutes les valeurs V du tableau 1, à savoir SF, CATsurface, OFA et Dp, sont des valeurs relatives, données en pourcent, obtenues avec un bloc particulier par rapport au bloc de référence :

$$V = ((V_{calculée} - V_{référence}) / V_{référence}) \times 100,$$

où

- $V_{calculée}$ est la valeur calculée théorique pour le bloc particulier, et
- $V_{référence}$ est la valeur calculée théorique pour le bloc de référence.

Tableau 1

| | Dc (cpsi) | Epf (μm) | A (%) | p (mm) | Ea (μm) | MAX1 (μm) | MAX2 (μm) | SF (%) | CAT surface (%) | OFA (%) | Dp (%) |
|---|---|---|---|---|---|---|---|---|---|---|---|
| *1 | 180 | 380 | - | 1,9 | - | - | - | 100 | 100 | 100 | 100 |
| *2 | 180 | 350 | 7 | 1,9 | - | - | - | 108 | 108 | 132 | 100 |
| 3 | 112 | 150 | 20 | 2,4 | 100 | 234 | 726 | 102 | 236 | 147 | 107 |
| *4 | 112 | 150 | **14** | 2,4 | 150 | **128** | 726 | **95** | 218 | 170 | 60 |
| 5 | 122 | 150 | 12 | 2,3 | 50 | 166 | 687 | 102 | 234 | 178 | 51 |
| 6 | 122 | 150 | **14** | 2,3 | 50 | 201 | 687 | 100 | 238 | 136 | 61 |
| 7 | 122 | 150 | **14** | 2,3 | 100 | 201 | 687 | 100 | 232 | 158 | 65 |
| 8 | 122 | 250 | 18 | 2,3 | 100 | 167 | 547 | 100 | 232 | 172 | 145 |
| *9 | 122 | 250 | 18 | 2,3 | 200 | **167** | 547 | **95** | 222 | 113 | 154 |
| 10 | 133 | 150 | 20 | 2,2 | 100 | 356 | 648 | 106 | 255 | 117 | 128 |

(suite)

| | Dc (cpsi) | Epf (μm) | A (%) | p (mm) | Ea (μm) | MAX1 (μm) | MAX2 (μm) | SF (%) | CAT surface (%) | OFA (%) | Dp (%) |
|---|---|---|---|---|---|---|---|---|---|---|---|
| 11 | 133 | 150 | 20 | 2,2 | 150 | 356 | 648 | 109 | 249 | 185 | 132 |
| *12 | 133 | 200 | 6 | 2,2 | 100 | **82** | 578 | **95** | 223 | 112 | 65 |
| 13 | 161 | 250 | 10 | 2 | 100 | 223 | 430 | 103 | 246 | 141 | 116 |
| 14 | 161 | 250 | 8 | 2 | 100 | 194 | 430 | 102 | 243 | 133 | 109 |
| 15 | 161 | 250 | **14** | 2 | 150 | 276 | 430 | 104 | 244 | 148 | 148 |
| *16 | 161 | 250 | 8 | 2 | 250 | **194** | 430 | **91** | 219 | 106 | 133 |
| 17 | 161 | 300 | 10 | 2 | 100 | 173 | 360 | 101 | 240 | 134 | 137 |
| *18 | 161 | 400 | 10 | 2 | 250 | **73** | **220** | **86** | 206 | **96** | 218 |
| *19 | 161 | 400 | 10 | 2 | 300 | **73** | **220** | **83** | 198 | **89** | **231** |
| 20 | 179 | 200 | 14 | 1,9 | 50 | 370 | 461 | 116 | 276 | 112 | 126 |
| 21 | 179 | 250 | 10 | 1,9 | 100 | 272 | 391 | 108 | 257 | 138 | 131 |
| 22 | 179 | 250 | 10 | 1,9 | 150 | 272 | 391 | 104 | 248 | 129 | 138 |
| 23 | 179 | 300 | 10 | 1,9 | 100 | 222 | 321 | 105 | 250 | 131 | 154 |
| *24 | 179 | 300 | 10 | 1,9 | 250 | **222** | 321 | **94** | 225 | 104 | 182 |
| *25 | 179 | 300 | 10 | 1,9 | 300 | **222** | 321 | 90 | 216 | **95** | 194 |
| 26 | 179 | 350 | 8 | 1,9 | 100 | 146 | 251 | 101 | 237 | 116 | 168 |
| 27 | 179 | 350 | 10 | 1,9 | 100 | 172 | 251 | 104 | 241 | 152 | 180 |
| *28 | 179 | 350 | 8 | 1,9 | 150 | **146** | 251 | **95** | 228 | **96** | 178 |
| *29 | 179 | 350 | 14 | 1,9 | 250 | **220** | 251 | **97** | 226 | 120 | **252** |
| 30 | 199 | 300 | 8 | 1,8 | 150 | 240 | 282 | 104 | 243 | 184 | 173 |
| *31 | 199 | 300 | 6 | 1,8 | 250 | **216** | 282 | **92** | 218 | 137 | 193 |
| 32 | 199 | 350 | 14 | 1,8 | 200 | 256 | 212 | 105 | 243 | 173 | **274** |
| *33 | 199 | 350 | 14 | 1,8 | 300 | **256** | **212** | **93** | 225 | **98** | **304** |
| *34 | 199 | 400 | 18 | 1,8 | 300 | **247** | **142** | **98** | 230 | 164 | **491** |
| *35 | 223 | 350 | 14 | 1,7 | 250 | **285** | **173** | 104 | 241 | 186 | **335** |
| *36 | 223 | 350 | 14 | 1,7 | 300 | **285** | **173** | **96** | 231 | 128 | **356** |
| 37 | 252 | 150 | 6 | 1,6 | 150 | 436 | 414 | 121 | 291 | 117 | 131 |
| 38 | 252 | 200 | 6 | 1,6 | 100 | 386 | 344 | 123 | 295 | 121 | 145 |
| 39 | 252 | 200 | 6 | 1,6 | 150 | 386 | 344 | 117 | 282 | 109 | 156 |
| *40 | 252 | 400 | 6 | 1,6 | 200 | **186** | **64** | **95** | 225 | 162 | **332** |
| *41 | 252 | 400 | 16 | 1,6 | 250 | 273 | **64** | 106 | 248 | 173 | **558** |
| * Exemples en dehors de l'invention | | | | | | | | | | | |

Le tableau 1 indique que la surface totale (CATsurface) en cas de présence d'ailettes est au moins deux fois plus grande par rapport celle du bloc de référence.

On peut noter également que, dans les blocs de l'invention, la capacité de stockage est améliorée de 10 à 90% par rapport à celle du bloc de référence.

D'autres essais ont également montré l'influence du positionnement et de la forme des ailettes dans les canaux. De préférence, l'ensemble des ailettes internes d'un canal, vue en section transversale, présente une forme de X, les extrémités de chacune des quatre branches du X étant chacune en contact avec un angle de ce canal. Cette configuration correspond au mode de réalisation représenté sur la figure 5, préféré entre tous.

Les inventeurs ont également découvert qu'un mauvais dimensionnement de l'épaisseur des ailettes conduit à diminuer la résistance mécanique de la structure et/ou à augmenter la perte de charge induite par la traversée du bloc filtrant et/ou à diminuer de manière rédhibitoire la surface de filtration, comme le démontrent les résultats du tableau ci-dessus.

Les inventeurs ont alors recherché les épaisseurs d'ailettes offrant les meilleurs compromis entre la résistance mécanique, la perte de charge et la surface de filtration. En particulier, il s'est avéré souhaitable que la perte de charge reste inférieure à 2,2 fois celle du bloc de référence et que la surface de filtration soit égale ou supérieure à celle du bloc de référence.

Les inventeurs ont finalement trouvé qu'il est préférable que l'épaisseur Ea d'une ailette ne dépasse pas une valeur une valeur MAX2 égale à (unités SI)

$$0,39 * p - 0,7 * ((2 * E_{pf}) - E_{pf}^2)$$

et/ou, lorsque les parois intermédiaires 40 séparant les rangs horizontaux de canaux adjacents et les rangs verticaux de canaux adjacents présentent, en coupe transversale, une forme ondulée, une valeur MAX1 égale à (unités SI) :

$$p - E_{pf} - [420 * p^2 / (1+A)]$$

où

- « $E_{pf}$ » désigne l'épaisseur moyenne des parois filtrantes du canal comportant ladite ailette, en mètre,
- « p » est le pas du réseau de canaux du bloc, en mètre,
- « A » désigne le taux d'asymétrie.

De préférence, ces deux conditions sont respectées par au moins une ailette du bloc filtrant, de préférence par toutes les ailettes du bloc filtrant.

Par ailleurs, Ea est de préférence inférieure ou égale à $E_{pf}$.

Bien entendu, la présente invention n'est pas limitée aux modes de réalisation décrits et représentés ci-dessus, fournis à titre illustratif et non limitatif.

Ainsi l'invention concerne également un corps filtrant monolithique. Le bloc filtrant pourrait avoir une forme quelconque, un arrangement de canaux quelconque.

Les ailettes sont de préférence venues de matière avec les parois des canaux sur lesquelles elles sont fixées, mais pourraient être également collées ou insérées dans lesdits canaux après formation d'un bloc filtrant selon la technique antérieure.

L'épaisseur $E_{pf}$ des parois filtrantes du canal dans lequel s'étend l'ailette, mesurée dans une coupe transversale, est de préférence constante pour toutes ces parois. De préférence, toutes les parois filtrantes du bloc filtrant selon l'invention ont une épaisseur identique. De préférence encore, l'épaisseur $E_{pf}$ est constante quel que soit le plan de coupe transversal considéré. Ces caractéristiques ne sont cependant pas limitatives.

Enfin, la section transversale des canaux n'est pas limitée aux formes décrites.

## Revendications

**1.** Bloc pour la filtration des particules contenues dans les gaz d'échappement d'un moteur à combustion interne, comprenant des ensembles imbriqués de canaux d'entrée (14e) et de canaux de sortie (14s) adjacents, lesdits canaux d'entrée (14e) et de sortie (14s) étant disposés en alternance de manière à former, en section, un motif en damier, le volume global desdits canaux d'entrée (14e) étant supérieur à celui desdits canaux de sortie (14s), **caractérisé en ce qu'**au moins un espace intérieur (20e,20s) d'un desdits canaux (14e,14s) comporte au moins une ailette interne (30) et **en ce que** l'épaisseur « Ea » de l'ailette interne (30) mesurée en mètre dans une coupe transversale répond à l'expression suivante :

$$Ea \leq 0{,}39^*p - 0{,}7^* \left((2^*E_{pf})-E_{pf}^2\right)$$

où

- « $E_{pf}$ » désigne l'épaisseur moyenne des parois filtrantes du canal comportant ladite ailette, mesurée en mètre dans ladite coupe transversale,
- « p » est le pas du réseau de canaux du bloc, mesuré en mètre dans ladite coupe transversale.

**2.** Bloc selon la revendication 1, **caractérisé en ce que** ladite ailette (30) s'étend selon un plan sensiblement longitudinal.

**3.** Bloc selon l'une quelconque des revendications précédentes, **caractérisé en ce que** ladite ailette (30) définit une surface continue.

**4.** Bloc selon l'une quelconque des revendications précédentes, **caractérisé en ce que** ladite ailette (30) est venue de matière avec une paroi latérale (22e,22s) dudit canal (14e,14s).

**5.** Bloc selon l'une quelconque des revendications précédentes, **caractérisé en ce que** ladite ailette (30) cloisonne ledit espace intérieur (20e,20s).

**6.** Bloc filtrant selon l'une quelconque des revendications précédentes, **caractérisé en ce que** tous lesdits espaces intérieurs (20e) des seuls canaux d'entrée (14e) comportent au moins une ailette (30).

**7.** Bloc filtrant selon l'une quelconque des revendications précédentes, **caractérisé en ce qu'**au moins une paroi intermédiaire (40) séparant deux rangs horizontaux (R1,R2) ou verticaux desdits canaux présente, en coupe transversale, une forme sinusoïdale.

**8.** Bloc filtrant selon l'une quelconque des revendications précédentes, **caractérisé en ce qu'**au moins une paroi intermédiaire (40) séparant deux rangs horizontaux (R1,R2) ou verticaux desdits canaux présente, en coupe transversale, une forme ondulée.

**9.** Bloc selon la revendication 8, **caractérisé en ce que** l'épaisseur « Ea » de l'ailette interne (30), en mètre, répond à l'expression suivante :

$$Ea \leq p - E_{pf} - [420^*p^2/(1+A)]$$

où

- « $E_{pf}$ » désigne l'épaisseur moyenne des parois filtrantes du canal comportant ladite ailette, mesurée en mètre dans ladite coupe transversale,
- «p » est le pas du réseau de canaux du bloc, mesuré en mètre dans ladite coupe transversale, et
- « A » désigne le taux d'asymétrie dans ladite coupe transversale.

**10.** Bloc filtrant selon l'une quelconque des revendications précédentes, **caractérisé en ce que** l'épaisseur « Ea » de l'ailette interne (30) est inférieure ou égale à l'épaisseur moyenne « $E_{pf}$ » des parois filtrantes du canal comportant ladite ailette.

**11.** Bloc filtrant selon l'une quelconque des revendications précédentes, **caractérisé en ce qu'**il comporte une pluralité d'ailettes (30a-30d) s'étendant à partir d'une ligne de jonction (36).

**12.** Bloc filtrant selon la revendication 10, **caractérisé en ce que** lesdites ailettes (30a-30d) sont disposées équiangulairement autour de la ligne de jonction (36).

**13.** Bloc filtrant selon la revendication 11, **caractérisé en ce que** l'ensemble des ailettes internes d'un canal, vues en section transversale, présente une forme de X, les extrémités de chacune des quatre branches du X étant chacune en contact avec un angle dudit canal.

14. Corps filtrant destiné à un filtre à particules, **caractérisé en ce qu'**il comporte au moins un bloc (11) conforme à l'une quelconque des revendications précédentes.


**Claims**

1. A block for filtering particles contained in the exhaust gas from an internal combustion engine, comprising imbricated sets of adjacent inlet channels (14e) and outlet channels (14s), said inlet channels (14e) and outlet channels (14s) being disposed in an alternating manner to form a checkerboard pattern in section, the overall volume of said inlet channels (14e) being greater than that of said outlet channels (14s), **characterized in that** at least one inside space (20e, 20s) of one of said channels (14e, 14s) includes at least one internal fin, and **in that** the thickness "Ea" of the internal fin, measured in meters in cross section, satisfies the following expression:

$$Ea \leq 0.39*p - 0.7*((2*E_{pf}) - E_{pf}^2)$$

in which:

- "$E_{pf}$" denotes the mean thickness of the filter walls of the channel including said fin, measured in meters in said cross section;
- "p" is the pitch of the array of channels of the block, measured in meters in said cross section.

2. A block according to claim 1, **characterized in that** said fin (30) extends in a substantially longitudinal plane.

3. A block according to any one of the preceding claims, **characterized in that** said fin (30) defines a continuous surface.

4. A block according to any one of the preceding claims, **characterized in that** said fin (30) is formed integrally with the material of the side wall (22e, 22s) of said channel (14e, 14s).

5. A block according to any one of the preceding claims, **characterized in that** said fin (30) partitions said inside space (20e, 20s).

6. A filter block according to any one of the preceding claims, **characterized in that** all said inside spaces (20e) of the inlet channels (14e) only include at least one fin (30).

7. A filter block according to any one of the preceding claims, **characterized in that** at least one intermediate wall (40) separating two horizontal (R1, R2) or vertical rows of said channels has a cross-sectional, shape that is sinusoidal.

8. A filter block according to any one of the preceding claims, **characterized in that** at least one intermediate wall (40) separating two horizontal (R1, R2) or vertical rows of said channels has a cross-sectional shape that is undulating.

9. A block according to claim 8, **characterized in that** the thickness "Ea" of the internal fin (30), in meters, satisfies the following expression:

$$Ea \leq p - E_{pf} - [420*p^2/(1+A)]$$

in which:

- "$E_{pf}$" denotes the mean thickness of the filter walls of the channel comprising said fin, measured in meters in said cross section;
- "p" is the pitch of the array of channels of the block, measured in meters in said cross section; and
- "A" denotes the degree of asymmetry in said cross section.

**10.** A filter block according to any one of the preceding claims, **characterized in that** the thickness "Ea" of the internal fin is less than or equal to the mean thickness "$E_{pf}$" of the filter walls of the channel including said fin.

**11.** A filter block according to any one of the preceding claims, **characterized in that** it includes a plurality of fins (30a-30d) extending from a junction line (36).

**12.** A filter block according to claim 10, **characterized in that** said fins (30a-30d) are disposed in an equiangular manner about the junction line (36).

**13.** A filter block according to claim 11, **characterized in that** the set of internal fins of a channel have the form of an X, viewed in cross section, the ends of each of the four branches of the X each being in contact with a corner of said channel.

**14.** A filter body for filtering particles, comprising at least one block (11) according to any preceding claim.

**Patentansprüche**

**1.** Block zur Filtration von in den Abgasen eines Verbrennungsmotors enthaltenen Partikeln bestehend aus einer Anordnung von über- und nebeneinander angeordneten Eingangskanälen (14e) und Ausgangskanälen (14s), die aneinander angrenzen, wobei die Eingangskanäle (14e) und die Ausgangskanäle (14s) im Wechsel zueinander angeordnet sind, derart, dass sie im Schnitt einem Dame-Brett ähneln und das Gesamtvolumen der Eingangskanäle (14e) größer ist als das der Ausgangskanäle (14s),
**dadurch gekennzeichnet,**
**dass** mindestens ein Innenraum (20e, 20s) eines der Kanäle (14e, 14s) mindestens eine innere Rippe (30) aufweist und dass die Dicke "Ea" der inneren Rippe (30) gemessen in Metern in einem Querschnitt dem folgenden Ausdruck gehorcht:

$$Ea \leq 0,39*p - 0,7*((2*E_{pf}) - E_{pf}^{2})$$

wobei

- "$E_{pf}$" die mittlere Dicke der Filterzwischenwände des Kanals bezeichnet, der die Trennwand aufweist, gemessen in Meter im Querschnitt,
- "p" die Rasterweite der Kanäle des Blocks ist, gemessen in Metern im Querschntt.

**2.** Block nach Anspruch 1,
**dadurch gekennzeichnet,**
**dass** die Rippe (30) sich entlang einer longitudinalen Ebene erstreckt.

**3.** Block nach einem der vorhergehenden Ansprüche,
**dadurch gekennzeichnet,**
**dass** die Rippe (30) eine kontinuierliche Oberfläche definiert.

**4.** Block nach einem der vorhergehenden Ansprüche,
**dadurch gekennzeichnet,**
**dass** die Rippe (30) aus dem gleichen Material wie eine seitliche Zwischenwand (22e, 22s) des Kanals (14e, 14s) ist.

**5.** Block nach einem der vorhergehenden Ansprüche,
**dadurch gekennzeichnet,**
**dass** die Rippe (30) den Innenraum (20e, 20s) unterteilt.

**6.** Filterblock nach einem der vorhergehenden Ansprüche,
**dadurch gekennzeichnet,**
**dass** alle Innenräume (20e) der jeweiligen Eingangskanäle (14e) mindestens eine Rippe (30) aufweisen.

**7.** Filterblock nach einem der vorhergehenden Ansprüche,
**dadurch gekennzeichnet,**
**dass** mindestens eine Zwischenwand (40), die zwei horizontale oder vertikale Reihen (R1, R2) der Kanäle voneinander trennt, im Querschnitt eine Sinusform darstellt.

**8.** Filterblock nach einem der vorhergehenden Ansprüche,
**dadurch gekennzeichnet,**
**dass** mindestens eine Zwischenwand (40), die zwei horizontale oder vertikale Reihen (R1, R2) der Kanäle voneinander trennt, im Querschnitt eine Wellenform darstellt.

**9.** Block nach Anspruch 8,
**dadurch gekennzeichnet,**
**dass** die Dicke "Ea" der inneren Rippe (30) in Metern dem folgenden Ausdruck gehorcht:

$$Ea \leq p-E_{pf} - [420*p^2/(1+A)]$$

wobei

- "$E_{pf}$" die mittlere Dicke der Filterzwischenwände des Kanals bezeichnet, der die Rippe aufweist, gemessen in Meter im Querschnitt,
- "p" das Rastermaß der Blockkanäle ist, gemessen in Meter im Querschnitt und
- "A" den Grad der Asymmetrie im Querschnitt darstellt.

**10.** Filterblock nach einem der vorhergehenden Ansprüche,
**dadurch gekennzeichnet,**
**dass** die Dicke "Ea" der internen Rippe (30) geringer oder gleich der mittleren Dicke "$E_{pf}$" der Filterzwischenwände des Kanals ist, der die Rippe aufweist.

**11.** Filterblock nach einem der vorhergehenden Ansprüche,
**dadurch gekennzeichnet,**
**dass** er eine Vielzahl von Rippen (30a bis 30 d) aufweist, die sich entlang einer Verbindungslinie (36) erstrecken.

**12.** Filterblock nach Anspruch 10,
**dadurch gekennzeichnet,**
**dass** die Rippen (30a-30d) in gleichen Winkelabständen um die Verbindungslinie (36) angeordnet sind.

**13.** Filterblock nach Anspruch 11,
**dadurch gekennzeichnet,**
**dass** das Ensemble der inneren Rippen eines Kanals, gesehen im Querschnitt, in Form eines X angeordnet sind, wobei die Enden jedes der vier Zweige des X jeder in Kontakt mit einer Ecke des Kanals ist.

**14.** Filterkörper für einen Partikelfilter,
**dadurch gekennzeichnet,**
**dass** er mindestens einen Block (11) aufweist, der einem der vorhergehenden Ansprüche entspricht.

Fig. 1

Fig. 2

Fig. 3a

Fig. 3b

Fig. 3c

Fig. 3d

Fig. 3e

Fig. 3f

Fig. 4

Fig. 5

**EP 1 792 063 B1**

**RÉFÉRENCES CITÉES DANS LA DESCRIPTION**

**Documents brevets cités dans la description**

- WO 0123069 A
- US 2004037754 A
- FR 2840545